# EUROPEAN PATENT APPLICATION

(11) **EP 2 063 589 A1**
(43) Date of publication of application: **27.05.2009**
(21) Application number: 08168456.5
(22) Date of filing: 06.11.2008
(51) Int. Cl.: H04L 12/58

(54) **Method and apparatus for sending message delivery reports**

(30) Priority: 26.11.2007 CN 200710167394; 02.06.2008 WO PCT/CN2008/071164
(71) Applicant: Huawei Technologies Co., Ltd., Longgang District, Shenzhen Guangdong 518129 (CN)
(72) Inventor: Li, Xiaoqiang, Shenzhen, Guangdong 518129 (CN)
(74) Representative: Thun, Clemens

(57) **Abstract**

A method for sending message delivery reports includes: buffering the message delivery reports to be sent; retrieving at least two message delivery reports to be sent; generating an aggregate that contains at least two message delivery reports to be sent; and outputting the aggregate. An apparatus for sending message delivery reports includes: a obtaining module, a generating module and an outputting module. With the foregoing method and apparatus, the message server can send multiple delivery reports at a time, thus improving the success ratio of sending delivery reports, improving the efficiency of handling delivery reports, reducing the waste of network resources, and improving the system performance.

## Description

### CROSS-REFERENCE TO RELATED APPLICATION

This application is a continuation of International Patent Application No. PCT/CN2008/071164, filed June 2, 2008, which claims priority to Chinese Patent Application No. 200710167394.X, filed November 26, 2007, each of which is hereby incorporated by reference in its entirety.

### FIELD OF THE INVENTION

The present invention relates to mobile communication technologies, and in particular, to a method and apparatus for sending message delivery reports.

### BACKGROUND OF THE INVENTION

The multimedia message service (MMS) evolves from the short message service (SMS) and the enhanced message service (EMS), and provides a complete end-to-end solution to personal multimedia mobile communication services. From the perspective of communication contents, a multimedia message contains images, audio, video, and data; from the perspective of functions, the MMS covers multimedia message communications from terminals to terminals, from terminals to application devices (for example, value-added service provider, and email server), and from application devices to terminals. It not only transfers information between different terminals, and between terminals and application devices, but also supports a variety of contents, including picture, voice, image, data, text, and a combination thereof. As an open media access platform, the MMS can derive diversified content service applications through interaction between mobile users and Internet content providers. A user may be a MMS consumer and a content developer, and hence, users may be more interested in using the service.

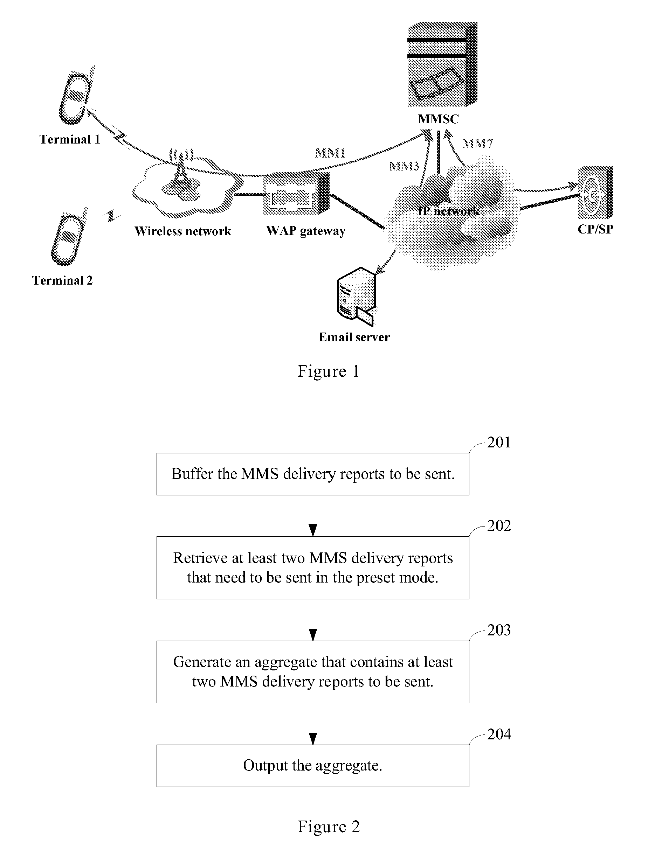

In service deployment, an operator usually needs to use more than one message server, for example, use a multimedia message service center (MMSC) to provide the MMS service for users, where each MMSC manages a portion of the users and provides the corresponding user access function. Figure 1 shows the protocol interface between a MMSC and each related network device in the conventional art. As shown in Figure 1, the MMSC interacts with the terminal through a WAP gateway by using the MM1 protocol; the MMSC interacts with the email server by using the MM3 protocol, where the bearer protocol is the Simple Mail Transfer Protocol (SMTP); the MMSC interacts with the service provider/content provider (SP/CP) via the MM7 protocol, where the bearer protocol is generally the Hyper Text Transfer Protocol (HTTP), or any other protocol.

Taking the service from a value-added service provider (SP) to a terminal as an example, the process of handling a delivery report in the MMS service under the conventional art is as follows:

Step 1: The SP submits a MMS message directed to a terminal to the MMSC.

Step 2: The MMSC sends a MMS notification to the terminal, according to the number of the terminal.

Step 3: The terminal retrieves the MMS message from the MMSC, according to the received MMS notification.

Step 4: The MMSC sends a delivery report to the SP, telling that the terminal has received the MMS message.

In the MMS service, however, a SP may send a MMS message to multiple users at a time, for example, the SP sends a weather forecast MMS message to 10,000 users at a time. In this case, in the foregoing handling process, Step 1 only needs to be performed once, but Steps 2-4 must be performed for 10,000 times. Because the MMSC can send only one delivery report to the SP at a time, the MMSC has to send a MMS delivery report to the SP for 10,000 times after the MMS message is retrieved by every terminal. Similarly, if the SP sends a short message to 10,000 users, the short message service center (SMSC) has to send a SMS delivery report to the SP for 10,000 times.

On the increasingly busy mobile communication networks, the success ratio of sending delivery reports is reduced if such reports are sent frequently. Because only one delivery report can be sent at a time, the efficiency is low, and the system performance and the network resources are wasted largely.

### SUMMARY OF THE INVENTION

The embodiments of the invention provide a method and apparatus for sending message delivery reports so that the message server can send multiple delivery reports at a time.

The embodiments of the invention provide the following technical scheme: A method for sending message delivery reports includes: (i) buffering the message delivery reports that need to be sent; (ii) retrieving at least two message delivery reports that need to be sent; (iii) generating an aggregate that contains at least two message delivery reports to be sent; and(iv) outputting the aggregate.

An apparatus for sending message delivery reports provided in an embodiment of the invention includes: a obtaining module, a generating module and an outputting module, wherein: the obtaining module is adapted to retrieve at least two message delivery reports that need to be sent; the generating module is adapted to generate an aggregate of delivery reports according to the message delivery reports retrieved by the retrieving module, where the aggregate contains at least two message delivery reports that need to be sent; and the outputting module is adapted to output the aggregate.

As described above, the embodiments of the invention provide a method and apparatus for sending message delivery reports. With the method and apparatus, the delivery reports to be sent are buffered first, and multiple buffered delivery reports are output at a time. In this way, the message server can send multiple delivery reports at a time, thus improving the success ratio of sending delivery reports, improving the efficiency of handling delivery reports, reducing the waste of network resources, and improving the system performance.

### BRIEF DESCRIPTION OF THE DRAWINGS

Figure 1 shows the protocol interface between a MMSC and each related network device in the conventional art;

Figure 2 is a flowchart of the method for sending MMS delivery reports in an embodiment of the invention;

Figure 3 shows the structure of the apparatus for sending MMS delivery reports in an embodiment of the invention; and

Figure 4 shows the structure of the apparatus for sending SMS delivery reports in an embodiment of the invention.

### DETAILED DESCRIPTION OF THE INVENTION

For better understanding of the technical scheme and advantages of the present invention, the invention is hereinafter described in detail with reference to some embodiments and the accompanying drawings.

A message delivery report described in the embodiments of the invention may be an MMS delivery report or a SMS delivery report, and the two types of delivery reports are handled in a similar way. For ease of description, the following assumes that all delivery reports are MMS delivery reports.

Figure 2 is a flowchart of the method for sending MMS delivery reports in an embodiment of the invention. As shown in Figure 2, the process of the method includes the following steps:

Step 201: Buffer the MMS delivery reports that need to be sent.

Upon receiving a delivery report, the MMSC does not send the delivery report to the corresponding application device immediately, but buffers it.

Step 202: Obtain at least two MMS delivery reports that need to be sent.

In this step, a preset mode may be used to retrieve at least two MMS delivery reports that need to be sent. The preset mode may be set-time, set-size, or a combination of the set-time and set-size. For example, the set-time mode may be: retrieve at least two MMS delivery reports to be sent in the buffer according to a preset time interval (such as 5 minutes); the set-size mode may be: retrieve at least two MMS delivery reports in the buffer, when the total size of the buffered MMS delivery reports reaches a preset threshold (such as 2 MB). The combination of the foregoing two methods may be: set a time interval and set a size threshold. That is, retrieve the delivery reports in the set-time mode when the time interval for the buffered MMS delivery reports expires first; retrieve the delivery reports in the set-size mode when the total size of the buffered MMS delivery reports reaches the set threshold first.

Step 203: Generate an aggregate of MMS delivery reports, where the aggregate contains at least two MMS delivery reports that need to be sent.

In Step 203, a message or file containing at least two buffered MMS delivery reports may be generated according to the MMS delivery reports retrieved in Step 202. That is, at least two MMS delivery reports to be sent in the buffer can be set in the same message or file to form a message or file that contains at least two delivery reports. For example, a delivery report request message in the conventional art may be extended to form an extended delivery report request message that contains at least two delivery reports; or a file may be created directly to contain at least two delivery reports. The method for extending a delivery report request message and the method for creating a file that contains at least two delivery reports will be described in detail in the first and second preferred embodiments of the invention.

Step 204: Output the aggregate.

SMS delivery reports can also be sent in the foregoing method, that is: buffering the SMS delivery reports to be sent; obtaining at least two SMS delivery reports to be sent; generating an aggregate that contains at least two SMS delivery reports to be sent; and finally, outputing the aggregate.

The method for sending MMS delivery reports is further described below with reference to the embodiments of the invention. For ease of description in the following embodiments, the technical scheme of embodiments of the present invention is based on the assumptions that the message server is an MMSC and that the message delivery report is a MMS delivery report. The method applied to non-MMS servers and non-MMS delivery reports is the same, and is not described further.

**First Embodiment:**

The delivery reports in the conventional art support multiple protocol interfaces, for example, HTTP interface, Simple Object Access Protocol (SOAP) interface. That is, the delivery reports may be transferred through multiple protocol interfaces. In order to send multiple delivery reports at a time, the protocol interface for sending delivery reports needs to be extended in this embodiment of the invention. For ease of description, it is assumed that the protocol interface is a SOAP interface in the following embodiments of the invention. The method for extending other protocol interfaces is similar and not described further.

In the SOAP interface, the common formats of delivery report request messages are shown in Table 1:

**TABLE 1**

| **Information Element** | **Location** | **Name** | **Remarks** |
|---|---|---|---|
| Transaction ID | Title | TransactionID | |
| Message-Type | Body | MessageType | |
| Version | Body | Version | The value is the serial number of the specifications, for example, 5.2.0. |
| MMS Relay/Server ID | Body | MMSRelayServerID | |
| Message ID | Body | MessageID | |
| Recipient address | Body | Recipient | |
| Sender address | Body | Sender | |
| Date and time | Body | TimeStamp | |
| MM Status | Body | MMStatus | Possible values include: timeout, received, rejected, unknown, and forwarded. |
| MMS Status Error Code | Body | MMS Status Error Code | For specific error codes, see the equipment specifications. |
| Status text | Body | StatusText | This field is mandatory in the case of storing multiple delivery reports. |

The fields in a delivery report in Table 1 are: Transaction ID, Message-Type, Version, MMS Relay/Server ID, Message ID, Recipient address, Sender address, Date and time, MM Status, MMS Status Error Code, and Status text.

In the SOAP interface, the common formats of delivery report response messages are shown in Table 2:

**TABLE 2**

| **Information Element** | **Location** | **Name** | **Remarks** |
|---|---|---|---|
| Transaction ID | Title | TransactionID | |
| Message-Type | Body | MessageType | |
| MM7 Version | Body | MM7Version | The value is the serial number of the specifications, for example, 5.2.0. |
| Request Status | Body | StatusCode | |
| Request Status text | Body | StatusText&Details | |

The fields in a delivery report in the foregoing table are: MM7 Version, Request Status, Request Status text, and StatusCode.

For a delivery report request message, five mandatory fields that can ensure normal service handling are included in a delivery report, and the five mandatory fields include Sender address, Recipient address, MessageID, MMStatus, and StatusText. In the SOAP interface, a delivery report request message in the conventional art only contains the five mandatory fields of one delivery report, so a delivery report request message can be used to send only one delivery report. Therefore, multiple delivery reports can be sent in one delivery report request message if the foregoing delivery report request message is extended to contain the foregoing five mandatory fields of multiple delivery reports.

Specifically, the method for extending a delivery report request message is described as following: extending the part that records the five mandatory fields of a delivery report in the delivery report request message; and recording the five mandatory fields of n (n>1) delivery reports continuously in this extended part. The number of recorded delivery reports (n) may be set beforehand in practice. Besides, for the purpose of identification, a new label can be set for the extended part. The name of the new label may be "MultiDR." That is, a <MultiDR> label is set at the header of the extended part, and a </MultiDR> label is set at the end of the extended part. Through the new label, the SP knows that the delivery report request message is extended and contains multiple delivery reports.

The specific implementation may be: buffering multiple delivery reports that need to be sent in the local memory; obtaining the MMS delivery reports to be sent in the local memory according to the set-time mode and/or set-size mode; generating an extended delivery report request message that contains multiple delivery reports, according to the retrieved delivery reports and the foregoing extension method; and outputing the extended delivery report request message. In this embodiment of the invention, the set-time mode is:
retrieve multiple MMS delivery reports to be sent in the buffer according to the preset time interval (such as 5 minutes); the set-size mode is: retrieve multiple MMS delivery reports to be sent in the buffer when the total size of the MMS delivery reports in the buffer reaches the preset threshold (such as 2 MB). In practice, multiple MMS delivery reports to be sent may be retrieved in the set-time mode only, the set-size mode only, or a combination of the set-time and set-size. The combination the set-time and set-size is: the delivery reports are retrieved in the set-time mode when the time interval for the buffered MMS delivery reports expires first; the delivery reports are retrieved in the set-size mode when the total size of the buffered MMS delivery reports reaches the preset threshold first.

After the delivery report request message is extended, it is necessary to extend the corresponding delivery report response message (after the MMSC sends a delivery report to each application device, each application device will return a delivery report response message to the MMSC). That is, n StatusCode fields are recorded sequentially in the part that records the StatusCode field in the delivery report response message corresponding to the extended delivery report request message. The recorded n StatusCode fields correspond to the n delivery reports in the extended delivery report request message exactly in the same sequence.

Taking the SOAP interface as an example, the SOAP interface message of the extended delivery report request is as follows:

```
 <?xml version="1.0" encoding="UTF-8"?>
 <env:Envelope xmlns:env="http://schemas.xmlsoap.org/soap/envelope/">
    <env:Header>
       <mm7: TransactionID
 xmlns:mm7="http://www.3gpp.org/ftp/Specs/archive/23_series/23.140/schema/REL-6-
 MM7-1-0"
 env:mustUnderstand="1">0110000000006020908131404302</mm7:TransactionID>
       </env:Header>
       <env:Body>
         <DeliveryReportReq
 xmlns="http://www.3gpp.org/ftp/Specs/archive/23_series/23.140/schema/REL-6-MM7-
 1-0">
            <MM7Version>6.3.0</MM7Version>
            <TimeStamp>2002-09-08T05:14:04-04:00</TimeStamp>
            <MMSReIayServerID>913000</MMSReIayServerID>
            <MultiDR>
                    <Sender>8888001</Sender>
                    <MessageID>082715595591300001146</MessageID>
                    <Recipient><Number>+8613701050001</Number></Recipient>
                    <MMStatus>Retrieved</MMStatus>
                    <StatusText> 1000</StatusText>
                    <Sender>7777123</Sender>
                    <MessageID>082716035691300001190</MessageID>
                    <Recipient><Number>+8613810240001</Number></Recipient>
                    <MMStatus>Retrieved</MMStatus>
                    <StatusText> 1000</StatusText>
                    <Sender>6666007</Sender>
                    <MessageID>082716590091300001235</MessageID>
                    <Recipient><Number>+8613501051234</Number></Recipient>
                    <MMStatus>Retrieved</MMStatus>
                    <StatusText>1000</StatusText>
            </MultiDR>
         </DeliveryReportReq>
       </env:Body>
    </env:Envelope>
```

In the foregoing message, the strikethrough part indicates the part that records the five mandatory fields of a delivery report in the delivery report request message before extended; the content recorded between <MultiDR> and </MultiDR> is the extended part in the extended delivery report request message.

The SOAP interface message of the delivery report response corresponding to the above extended delivery report request message is as follows:

```
 <?xml version="1.0" encoding="UTF-8"?>
 <soap-env:Envelope xmlns:soap-env="http://schemas.xmlsoap.org/soap/envelope/">
     <soap-env:Header>
        <mm7:TransactionID
 xmlns:mm7="http://www.3gpp.org/ftp/Specs/archive/23_series/23.140/schema/REL-6-
 MM7-1-0"
 soap-env:mustUnderstand="1">0110000000006020908131404302</mm7:TransactionI
 D>
       </soap-env:Header>
       <soap-env:Body>
         <DeliveryReportRsp
 xmlns="http://www.3gpp.org/ftp/Specs/archive/23_series/23.140/schema/REL-6-MM7-
 1-0">
            <MM7Version>6.3.0</MM7Version>
            <Status>
               <StatusCode>1000</StatusCode>
               <StatusCode>1000</StatusCode>
               <StatusCode>1000</StatusCode>
            </Status>
         </DeliveryReportRsp>
       </soap-env:Body>
    </soap-env:Envelope>
```

The delivery report response message in the conventional art contains only one StatusCode field, but the foregoing extended delivery report response message contains more than one StatusCode field. That is, for each delivery report in the extended delivery report request message, a corresponding StatusCode field exists in the extended delivery report response message. Moreover, the multiple StatusCode fields in the extended delivery report response message are in the same sequence as the multiple delivery reports in the extended delivery report request message.

Besides, if only one StatusCode field exists in the extended delivery report response message and the returned error information is "message format error," it is indicated that the application device does not support batch transfer of delivery reports. In this case, the MMSC sends the delivery reports one by one.

The delivery report mentioned above may be a MMS delivery report or a SMS delivery report. The delivery report is handled by the SMSC if it is a SMS delivery report.

**Second Embodiment:**

In this embodiment, the MMSC may record the fields of multiple delivery reports that need to be sent into the same local file in a preset sequence. This file may be called a record file. In the record file, each record corresponds to a delivery report and contains all fields of the delivery report. The record file may be a text file or a binary file. If the record file is a text file, each record in the record file may be in the following format:
Message-Type | MM7 Version | MMS Relay/Server ID | Date and time | Sender address | Message ID | Recipient address | MM Status Status text

The foregoing record format shows that each record in the record file contains all fields of a delivery report. For example, a record file containing three records may have the following contents:
DRReq|6.3.0|910000|20070527075956|888800|1082715595591300001146|+861350 1051234|Retrieved|1000
DRReq|6.3.0|910000|20070527075956|7777123|082716035691300001190|+861370 1050001|Retrieved|1000
DRReq|6.3.0|910000|20070527075956|6666007|082716590091300001235|+861381 0240001|Retrieved|1000

The foregoing record format in a text file is just an implementation. In practice, the record format in the text file may be set as required.

Besides, all fields of multiple delivery reports that need to be recorded may be compiled in a binary format and recorded into a binary file in a preset sequence.

The specific implementation may be: buffer multiple delivery reports to be sent in the local memory of the MMSC; retrieve multiple MMS delivery reports to be sent in the set-time mode or the set-size mode from the local memory; create a record file containing multiple delivery reports; and output the record file according to the retrieved delivery reports and the foregoing method. In the foregoing implementation, the set-time mode is: retrieve multiple MMS delivery reports to be sent in the buffer according to the preset time interval (such as 5 minutes); the set-size mode is: retrieve multiple MMS delivery reports to be sent in the buffer when the size of the record file reaches the preset threshold (such as 2 MB). In practice, the MMS delivery reports to be sent may be retrieved in the set-time mode only, the set-size only, or a combination the set-time and the set-size. Outputting a record file may be:
outputting the record file to a directory provided by the application device.

The record file may be sent to the application device in many other modes in addition to the foregoing proactive output mode, for example:

Mode 1: The application device retrieves the record file periodically from the specified location of the MMSC at a set time interval (for example, 5 minutes), and deletes the record file from the MMSC after retrieving the record file successfully. The record file may be retrieved by multiple means, for example, via File Transfer Protocol (FTP).

Mode 2: After the record file is output, a modified delivery report request message may be sent to the application device. In this modified request message, the four fields Sender address, Recipient address, MessageID and MMStatus are blank, but the StatusText field contains a storage path of the record file in the MMSC. If a delivery report response message containing an error code of "message format error" is returned directly after the application device receives the modified delivery report request message, it is indicated that the application device does not support the method for transferring multiple delivery reports, and the delivery reports will be sent one by one. If the application device supports the method for transferring multiple delivery reports, the application device retrieves the corresponding record file from the MMSC, according to the storage path in the modified delivery report request message. The application device returns a delivery report response message to the MMSC After retrieving the record file successfully. The record file may be retrieved in many modes, for example, via FTP, HTTP, POST/GET, or in other file transfer modes.

Besides, different record files are generated continuously, so the record files need to be identified through filenames. Therefore, the record files are named in this format:
MMSDeviceIDyyyymmddHHMISS.XXXX. An example of the name of a record file is 91000020070606174500.0019.

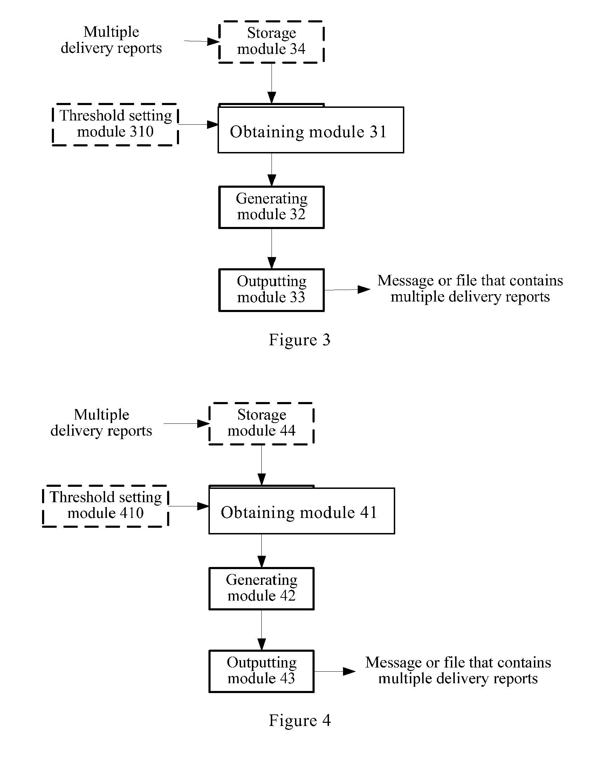

Figure 3 shows the apparatus for sending MMS delivery reports in an embodiment of the invention. As shown in Figure 3, the apparatus includes a obtaining module 31, a generating module 32, and an outputting module 33.

The obtaining module 31 is adapted to retrieve at least two MMS delivery reports to be sent, and send the retrieved MMS delivery reports to the generating module 32.

The generating module 32 is adapted to generate an aggregate of delivery reports, according to the MMS delivery reports retrieved by the obtaining module 31, where the aggregate contains at least two MMS delivery reports to be sent; and send the aggregate to the outputting module 33.

The outputting module 33 is adapted to output the aggregate.

The obtaining module 31 further includes a threshold setting module 310.

The threshold setting module 310 is adapted to send retrieval commands to the obtaining module 31 (i) at a set time interval; or (ii) when the total size of the MMS delivery reports to be sent in the buffer reaches the set threshold; or (iii) when the set time interval expires, or the total size of MMS delivery reports to be sent in the buffer reaches the set threshold.

The obtaining module 31 is also adapted to retrieve at least two MMS delivery reports to be sent according to a received retrieval command.

Besides, the apparatus for sending MMS delivery reports may also include a storage module 34.

The storage module 34 is adapted to store multiple MMS delivery reports to be sent.

The obtaining module 31 is also adapted to retrieve at least two MMS delivery reports to be sent in the storage module 34.

Figure 4 shows the apparatus for sending SMS delivery reports in an embodiment of the invention. As shown in Figure 4, the apparatus includes a obtaining module 41, a generating module 42, and an outputting module 43.

The obtaining module 41 is adapted to retrieve at least two SMS delivery reports to be sent, and send the retrieved SMS delivery reports to the generating module 42.

The generating module 42 is adapted to generate an aggregate of delivery reports according to the SMS delivery reports retrieved by the obtaining module 41, where the aggregate contains at least two SMS delivery reports to be sent; and send the aggregate to the outputting module 43.

The outputting module 43 is adapted to output the aggregate.

The obtaining module 41 further includes a threshold setting module 410.

The threshold setting module 410 is adapted to send retrieval commands to the obtaining module 41 (i) at a set time interval; or (ii) when the total size of the SMS delivery reports to be sent in the buffer reaches the set threshold; or (iii) when the set time interval expires, or the total size of SMS delivery reports to be sent in the buffer reaches the set threshold.

The obtaining module 41 is also adapted to retrieve at least two SMS delivery reports to be sent according to a received retrieval command.

Besides, the apparatus for sending SMS delivery reports may also include a storage module 44.

The storage module 44 is adapted to store multiple SMS delivery reports to be sent.

The obtaining module 41 is also adapted to retrieve at least two SMS delivery reports to be sent in the storage module 44.

In conclusion, with the method and apparatus provided in the embodiments of the present invention, the message server can buffer multiple delivery reports to be sent and then output them at a time, thus improving the success ratio of sending delivery reports, improving the efficiency of handling delivery reports, reducing the waste of network resources, and improving the system performance.

The embodiments of the invention may be implemented through software. The corresponding software programs may be stored in a readable medium. When the software runs, these steps are performed: (i) buffer the message delivery reports to be sent; (ii) retrieve at least two message delivery reports to be sent; (iii) generate an aggregate that contains at least two message delivery reports to be sent; and (iv) output the aggregate. The storage medium may be a computer hard disk, a buffer or a CD-ROM.

Although the invention has been described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for sending message delivery reports, comprising:
obtaining at least two message delivery reports to be sent;
generating an aggregate that contains the at least two message delivery reports to be sent; and
outputting the aggregate.

2. The method of claim 1, wherein the generating an aggregate that contains at least two message delivery reports to be sent comprises at least one of the following:
generating a delivery report request messages that contains the at least two message delivery reports to be sent; and
generating a file that contains the at least two message delivery reports to be sent.

3. The method of claim 2, wherein the generating a delivery report request messages that contains the at least two message delivery reports to be sent comprises:
recording continuously mandatory fields of the at least two message delivery reports in a part that records the mandatory fields of a message delivery report in the delivery report request messages.

4. The method of claim 3, wherein at the header and the end of the part that records the mandatory fields of the at least two message delivery reports are labeled, respectively, with a label for identifying the header and the end of the part.

5. The method of claim 4, further comprising:
receiving a delivery report response message corresponding to the delivery report request messages that contains the at least two message delivery reports to be sent; wherein in a part that records StatusCode fields in the delivery report response message, at least two StatusCode fields corresponding to the at least two message delivery reports according to the sequence of the at least two message delivery reports are recorded.

6. The method of claim 2, wherein the generating a file that contains the at least two message delivery reports to be sent comprises:
recording mandatory fields of the at least two message delivery reports in the file according to a set sequence.

7. The method of claim 1, wherein the obtaining at least two message delivery reports to be sent comprises at least one of the following:
obtaining the at least two message delivery reports according to a set time interval;
obtaining the at least two message delivery reports when the total size of the message delivery reports reaches a set threshold; and
obtaining the at least two message delivery reports when a set time interval expires first, obtaining the at least two message delivery reports when the total size of message delivery reports reaches a set threshold first.

8. The method of claim 2, wherein the outputting the aggregate comprises:
outputting the file to a specified location;
wherein the file at the specified location is obtained by a receiver of the file according to a set time interval.

9. The method of claim 2, wherein the outputting the aggregate comprises:
outputting the file to a specified location; and
sending a notification containing a address of the specified location to a receiver of the file to obtained the file.

10. A apparatus for sending message delivery reports, comprising an obtaining module, a generating module and an outputting module, wherein:
the obtaining module is adapted to obtain at least two message delivery reports to be sent, and send the obtained at least two message delivery reports to the generating module;
the generating module is adapted to generate an aggregate that contains the at least two message delivery reports to be sent, and send the aggregate to the outputting module; and
the outputting module is adapted to output the aggregate.

11. The apparatus of claim 10, further comprising:
a threshold setting module, adapted to send an obtaining command to the obtaining module at a set time interval or when the total size of the at least two message delivery reports to be sent reaches a set threshold.

12. The apparatus of claim 10, further comprising:
a storage module, adapted to store the at least two message delivery reports to be sent; and
wherein the obtaining module is further adapted to obtain the at least two message delivery reports to be sent from the storage module.

13. The apparatus of claim 11, further comprising:
a storage module, adapted to store the at least two message delivery reports to be sent; and
wherein the obtaining module is further adapted to obtain the at least two message delivery reports to be sent from the storage module.

14. The apparatus of claim 10, wherein the message delivery reports are multimedia message service(MMS) delivery reports or short message service(SMS)delivery reports.

15. A computer readable media, comprising logic encoded in the computer readable media, the logic when executed operable to implement the method according to the claim1-9.
